# EUROPEAN PATENT APPLICATION

(11) **EP 4 647 306 A1**
(43) Date of publication of application: **12.11.2025**
(21) Application number: 24174439.0
(22) Date of filing: 07.05.2024
(51) Int. Cl.: B60T 7/22, B60W 30/08, B60W 30/09, G08B 21/02, G08B 21/06

(54) **AN APPARATUS AND A METHOD FOR AVOIDING NEEDLESS WARNINGS**

(71) Applicant: KB Intellectual Property GmbH & Co. KG, 82049 Pullach (DE)
(72) Inventor: Nohl, Andreas, 80809 München (DE); Lukácsi, Levente, 80809 München (DE); Gergye, Árpád, 80809 München (DE); Gyöngyösi, Kamilla Blanka, 80809 München (DE)

(57) **Abstract**

An apparatus (100) for avoiding a needless warning of an emergency braking system (50) of a vehicle is disclosed. The emergency braking system (50) being configured to analyze a traffic situation, to issue a warning (52), and, after a warning period, to initiate an emergency braking (54) to avoid an otherwise inevitable collision of the vehicle. The apparatus comprises a monitoring device (110) configured to monitor a driver activity during the traffic situation and to detect a driver alertness (105) for the traffic situation; and a delay device (120) configured to delay a starting of the warning (52) or to provide a delayed warning (122) based on detected driver alertness (105) to avoid the needless warning.

## Description

The present invention relates to an apparatus and method for avoiding a needless warning and, in particular, to a monitoring of driver activities for suppressing false alarms of an automatic emergency brake system (AEBS).

Emergency situations in the automotive sector may refer to possible collisions of an ego vehicle with an object or another traffic participant (e.g. a vehicle ahead) which appears to be likely if no appropriate actions are taken to avoid the collision. To improve the traffic safety, vehicles may have an emergency braking systems which, after a warning period, can initialize an emergency braking to stop the vehicle prior to the collision. The warning is intended to make the driver aware of the critical traffic situation so that s/he has a chance to initiate the needed steps such as performing a suitable braking action. Such braking action will typically override the emergency braking system, at least if it is sufficient (over a lower threshold) to avoid the estimated collision.

However, there are many situations, where the driver is aware of a possible critical situation but does not (yet) start to brake the vehicle. One example would be a vehicle which intends to make a right turn at a crossing, and which will most likely be out of the traffic lane when the ego vehicle will reach the crossing. In such a situation a typical driver will release the acceleration pedal to slow down the vehicle a little in the assumption that the vehicle in front will have left the traffic lane in time. Conventional emergency braking system will interpret such situation not correctly which may result in a confusing warning because the driver was already aware of the situation. The driver may even conclude that another critical state or situation is coming up which s/he has not yet noticed.

A mitigation of this problem is provided by the conventional emergency braking system as described in EP 3 274 225 B1, which allows a dynamic warning time dependent on the traffic situation. However, also these systems still produce to many false warnings.

Therefore, there is still a demand for avoiding or suppressing unneeded warnings while still ensuring that the vehicle can be stopped in time in front of a possible obstacle. In particular, there is a demand for emergency braking systems which warn the driver only for situations which s/he is not yet aware of.

At least some of the problems of the conventional systems as described before are overcome by an apparatus of claim 1 or a method of claim 9. The dependent claims refer to further advantageous realizations of the subject matter of the independent claims.

The present invention relates to an apparatus for avoiding a needless warning of an emergency braking system of a vehicle. The emergency braking system is configured to analyze a traffic situation, to issue a warning, and, after a warning period, to initiate an emergency braking to avoid an otherwise inevitable collision of the vehicle. The apparatus includes:
- a monitoring device configured to monitor a driver activity during the traffic situation and to detect a driver alertness for the traffic situation; and
- a delay device configured to delay a starting of the warning or to provide a delayed or shortened warning based on detected driver alertness to avoid the needless warning.

The traffic situation may, for example, indicate a collision with an obstacle such as another vehicle (e.g. a vehicle in front or ahead) or with another traffic participant such as a bicycle rider or a pedestrian or an object such as a tree. The monitoring device may be a monitor or data processor which may be able to collect sensor data from sensors from which the driver alertness can be inferred. The delay device may be a data processor, or a delayer configured to determine a delay value for the (delayed) warning based on the actions performed by the driver. The apparatus may predict whether the actions are suitable to resolve the critical situation. For example, whether or not for the particular traffic situation a release of the acceleration pedal is enough to slow down the vehicle sufficiently without actuating the brake. For this, the exemplary vehicle ahead and its future motion may be evaluated and considered. For example, a flashing turning signal may indicate that the vehicle ahead makes a turn.

Although embodiments are applicable to any vehicle, the vehicle may be especially a utility vehicle such as a long-haul commercial vehicle or a truck. The vehicle may be equipped with data network or data connections (e.g. a vehicle bus) to provide a communication between various components/sensors that are available in the vehicle and can be utilized by the apparatus.

Optionally, the delay device is configured to maintain a minimal warning period (greater than zero) and/or to maintain a timing (starting time, length etc.) for the emergency braking.

Optionally, the monitoring device is configured to detect as driver activity one or more of the following values or their speed of change: a steering angle, position of a steering wheel, an accelerator pedal position, a brake actuation, a direction indicator (e.g. indicating a future direction change). For example, the apparatus may have access to sensors which can include one or more of the following sensors: an acceleration pedal sensor measuring the degree/speed of actuation of the acceleration pedal, a steering angle sensor measuring the steering angle and the change/speed of the steering angle, a camera capturing the surrounding of the vehicle which may indicate a turning signal of the vehicle ahead, an acceleration sensor to measure the acceleration/deceleration of the vehicle, a direction indicator, indicator light (e.g. flashing light), and other sensors.

Optionally, the delay device is configured to detect the driver alertness if the driver activity was detected within a predetermined period before a start of the warning period. For example, the delay device may get information about a scheduled or an upcoming warning and checks for the driver alertness by evaluating the sensor data.

Optionally, the delay device is configured to control the emergency braking system to do or not to do at least one of the following:
- to issue the delayed warning,
- to suppress an issued warning during the delay,
- not to issue any warning and to issue the delayed warning as replacement.

The delayed warning may have the same character (e.g. acoustic, haptic, optical etc.) as the warning issued by the emergency brake system, it is only delayed. Alternatively or additionally, it can also have a stronger level/degree to ensure that the driver is really alerted in the shortened time.

Optionally, the delay device is configured to override the emergency braking based on the detected driver alertness.

The emergency braking system may be configured to ignore driver activities below one or more minimal threshold values. Then, optionally, the monitoring device, when detecting the driver alertness, is configured to monitor the driver activity also below the one or more threshold values. Thus, the driver alertness can be inferred (only) from sensor values which a conventional emergency braking system ignores.

Embodiments relate also to an emergency braking system comprising: a controller (e.g. an electronic control unit, ECU) and an apparatus as described before. The controller may be configured to analyze a traffic situation, to issue a warning, and, after a warning period, to initiate an emergency braking to avoid an otherwise inevitable collision of the vehicle. The apparatus is configured to delay the warning and to shorten and/or to override the emergency braking if the detected driver alertness is decided to be above a threshold (e.g. has reached a certain level). According to further embodiments, the controller may be configured to implement the functions of the monitoring device and/or delay device, i.e. no separate data processors are necessary. However, the apparatus may have its own processor.

Embodiments also relate a method for avoiding a needless warning of an emergency braking system of a vehicle. The method includes the step of:
- monitoring a driver activity during the traffic situation;
- detecting a driver alertness for the traffic situation; and
- delaying a starting of the warning based on detected driver alertness to avoid the needless warning.

It is understood that the apparatus and/or the monitoring device and/or the delay device can comprise one or more processors or data processing systems with installed software that enable them to perform the described functions. Likewise, the apparatus and/or the monitoring device and/or the delay device can be integrated in a single unit but may also include multiple components, e.g. one entity for monitoring and another entity for delaying and/or warning. Thus, the apparatus shall be construed broadly to cover all entities that are able to provide the defined functions and may also include a screen for visualizing and/or means for alerting.

It is understood that the order of method steps may not be important to achieve the desired effect and can thus be different. It is further understood that the method may also be implemented in software, or on a computer, or as a computer program product. Therefore, embodiments relate also to a computer program having a program code for performing the method, when the computer program is executed on a processor or to a machine-readable storage medium/storage device characterized by having instructions codes stored therein adapted to perform the steps of the method, wherein said instructions codes are executed on a computer or processor.

Embodiments are able to overcome at least some of the above-mentioned problems by an apparatus and a method by relying on a (constant) monitoring of the driver activities. Based on this monitoring it is determined whether the driver has already acted appropriately to resolve the critical situation. For this, the apparatus can monitor several sensors such as a steering angle sensor, a sensor which detects the actuation of the acceleration pedal, a sensor monitoring the brake actuations, a sensor which captures the surroundings to interpret the traffic situation correctly, a sensor monitoring a direction change indicator etc. In particular, by combining different sensor data and by evaluating multiple changes in the right direction (i.e. which are suitable to mitigate the critical situation) and are strong enough (have reached a certain level), the apparatus or the monitoring device may infer that the driver is alerted. Moreover, by an exemplary controlling an available emergency braking system the apparatus can cause a delay of the warning or can override the warning while still allowing the emergency braking needed to stop the vehicle in time. Finally, if the system concludes that the critical situation will be resolved, either by the other traffic participants or by an appropriate reaction of the driver, the emergency braking can be released (overridden).

Some examples of the systems and/or methods will be described in the following by way of examples only, and with respect to the accompanying figures, in which:
- Fig. 1: depicts an apparatus for avoiding a needless warning of the emergency braking system according to an embodiment.
- Fig. 2: illustrates the operation of the apparatus as implemented according to embodiments.
- Fig. 3: depicts a schematical flowchart of a method for avoiding needless warnings to a driver.
- Fig. 4A,4B: illustrate advantages of embodiments in various traffic situations.

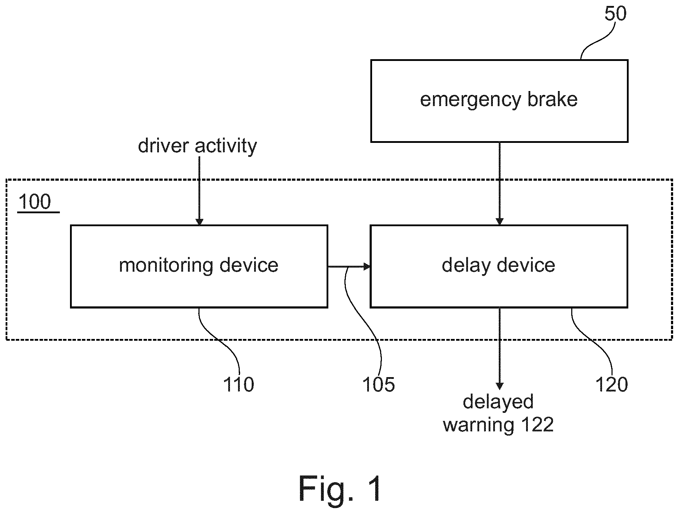

**Fig. 1** shows an apparatus 100 for avoiding a needless warning of an emergency braking system 50 according to an embodiment. The emergency braking system 50 couples to the apparatus 100 and is configured to detect emergency situations (e.g. increased risk of collisions) and to initiate an emergence braking after a warning had been issued. The emergency braking system 50 may initiate the emergency braking if the system 50 concludes that otherwise a collision is unavoidable. The warning shall trigger actions of the driver such as a sufficiently strong braking to resolve the emergency situation.

According to embodiments, the apparatus 100 includes a monitoring device 110 and a delay device 120 which are communicatively connected. The monitoring device 110 receives as input (sensor) data related to driver activities. The monitoring device 110 will interpret the input data and determine whether or not the driver appears to be sufficiently alerted about the traffic situation. The corresponding driver alertness 105 can be measured as a level dependent on which or how many (appropriate) actions the driver has performed to resolve the situation. The delay device 120 will receive the driver alertness 105 and, based on this, the delay device 120 may delay the warning as issued by and received from the emergency braking system 50. If needed, a delayed warning 122 may be issued. If the driver alertness 105 is strong enough, no warning may be issued. However, if the situation is not resolved - even the though the driver is sufficiently alerted, the emergency braking may still be initiated as it may be scheduled by the emergency braking system 50.

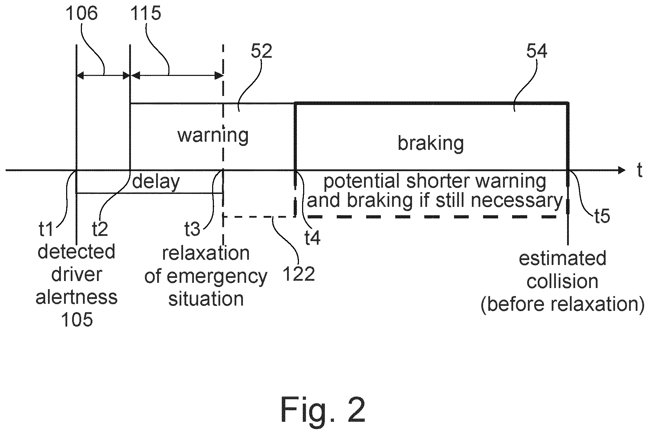

**Fig. 2** shows a timeline t with indicated operations of the apparatus 100 in a critical traffic situation according to embodiments (below the timeline t), where actions of a conventional emergency braking system 50 are illustrated above the timeline t.

If a critical traffic situation occurs, the emergency braking system 50 would issue, at a second time t2, a warning 52 in order to trigger an appropriate driver reaction taking into account the critical traffic situation. If the driver does not take appropriate actions within the warning period 52, the emergency braking system 50 initiates an emergency braking 54 at a fourth time t4 to ensure that the vehicle avoids an estimated collision at a fifth time t5.

According to embodiments, a driver alertness 105 may be detected by the monitoring device 110 at a first time t1, which is a first time period 106 before the warning period 52 would start at the second time t2 by the emergency braking system 50. However, according to embodiments, the detected driver alertness 105 causes that the warning 52 is delayed by a delay period 115 from the second time t2 up to a third time t3. If the driver does not take appropriate actions in the meantime, the delayed warning 112 starts at the third time t3 (t3 > t2). If the driver, during the delayed warning 112, still does not take appropriate actions to avoid the exemplary collision, the emergency braking 54 may start at the fourth time t4 to ensure that the vehicle can still avoid the estimated collision at the fifth time t5.

However, if the monitoring device 110 infers from the driver activity that the driver is aware of the situation and takes appropriate actions - even though the driver does not yet actuate the brake - the emergency braking 54 can be overridden or start at a later time (because the vehicle has already slowed down). In any case, according to embodiments, a time period for the emergency braking 54 should be sufficiently long to ensure that the vehicle can stop in time.

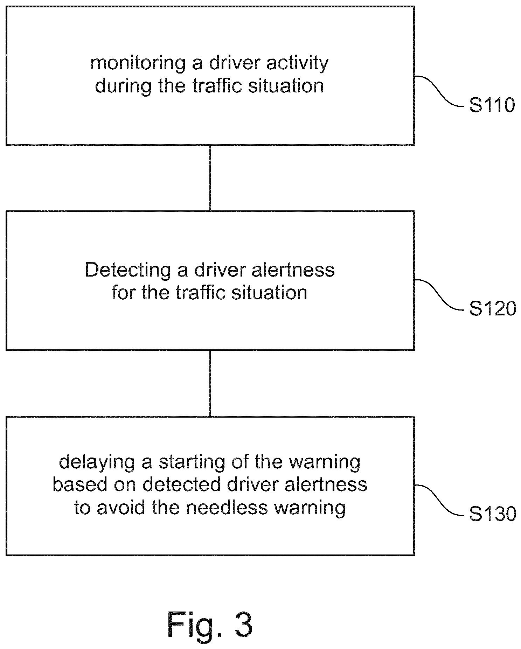

**Fig. 3** depicts a schematical flowchart of a method for avoiding needless warnings to a driver. The method comprises the steps of:
- monitoring S110 a driver activity during the traffic situation;
- detecting S120 a driver alertness for the traffic situation; and
- delaying S130 a starting of the warning based on detected driver alertness to avoid the needless warning.

A person of skill in the art would readily recognize that steps of the method(s) may be performed by programmed computers. Therefore, this method may thus be a computer-implemented method. Embodiments are also intended to cover program storage devices, e.g., digital data storage media, which are machine or computer readable and encode machine-executable or computer-executable programs or instructions, wherein the instructions perform some or all of the acts of the above-described method(s), when executed on the computer or processor.

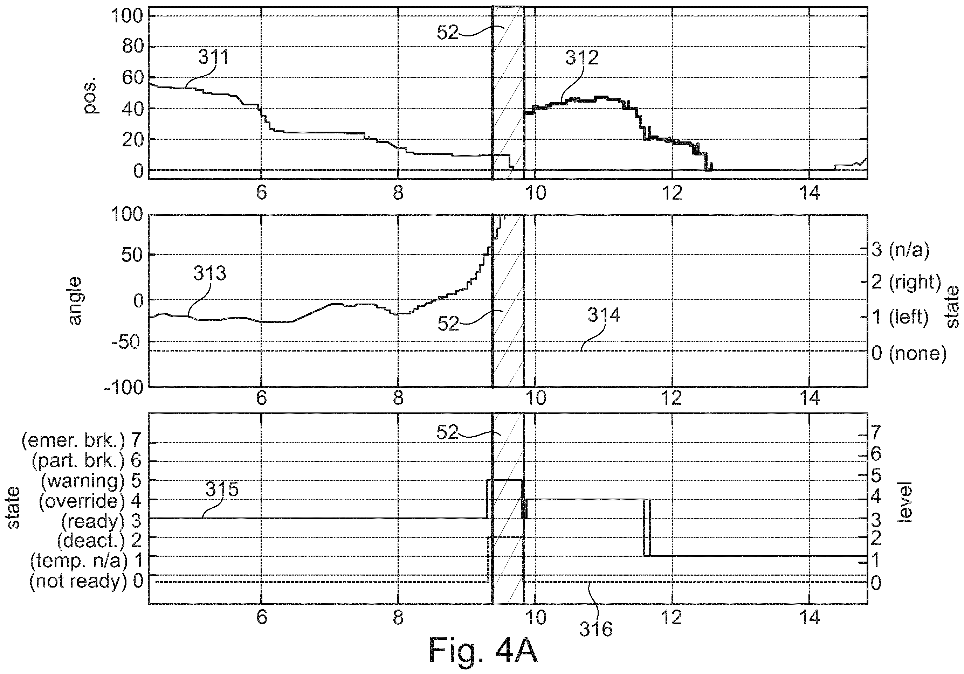

**Figs. 4A** to **4B** illustrate typical traffic situations in which embodiments can advantageously be utilized to avoid needless warnings to the driver. In detail, six graphs are shown for different traffic situations as function of time: from t=0 up to t=15 (e.g. measured in seconds or fractions thereof). The sixth graphs represent six time-dependent sensor quantities that embodiments may take into account to determine the driver alertness 105. It is understood that these six quantities are only examples and further embodiment may use more or may use less quantities (e.g. only some of them). For each traffic situation, the conventional emergency braking system would issue the warning 52 as indicated in the plots.

The six graphs show the following: a first graph 311 shows the position of the acceleration pedal as a function of time, a second graph 312 shows the brake pedal position as a function of time, a third graph 313 shows the steering angle as a function, a fourth graph 314 shows a state of a direction indicator as a function of time, a fifth graph 315 shows a state of the automatic emergency braking system 50 as a function of time, and a sixth graph 316a shows a level of the collision warning (e.g. also issued from the emergency braking system 50). The state of the automatic emergency braking system may have 7 levels: level 0 = not ready, level 1 = temporarily not available, level 2 = deactivated, level 3 = ready, level 4= override, level 5 = warning, level 6 = partially braking, level 7 = emergency braking. The level of the collision warning may also have 7 levels, which may indicate the strength and/or type of the warning (optic, haptic, acoustic, short braking, loudness of sound, a signal frequency, brightness, or color of warning lights etc.).

In **Fig. 4A****,** the depicted situation may happen in a curve where a vehicle is parked, or another obstacle is on the road. For the following reasons, the driver seems to be aware of the situation. The acceleration pedal position 311 shows a constantly decreasing actuation and becomes zero position (completely released) within the warning 52 shortly before the time 10, where the fifth graph 315a indicates a state 5 of warning with collision warning level 2 (i.e. the warning is issued). A little moment later, the braking pedal 312 is actuated overriding the (conventionally) issued warning 52, the warning 52 is turned off (caused by the brake actuation 312). At the same time, the steering angle 313 indicates that the vehicle is strongly steered to one side which indicates that the vehicle is about to make a turn - probably as an attempt to avoid any collision.

According to embodiments these actions are monitored, and the apparatus 100 may infer that the driver is actually aware of the situation. For example, the strong actuation of the steering angle 313 clearly indicates that the vehicle is about to move around the other obstacle or vehicle. Similarly, the releasing of the acceleration pedal 311 shows that the driver wishes to decelerate the vehicle. Therefore, according to embodiments the delay device 120 may delay the warning by a delay period 115. As consequence, the subsequent brake actuation 312 shortly before time 10 may fall in the delay period 115. Therefore, the delayed warning 112 will be overridden before it had started.

Therefore, embodiments will avoid this needless warning 52 which would have been issued by the conventional system and may have confused or distracted the driver.

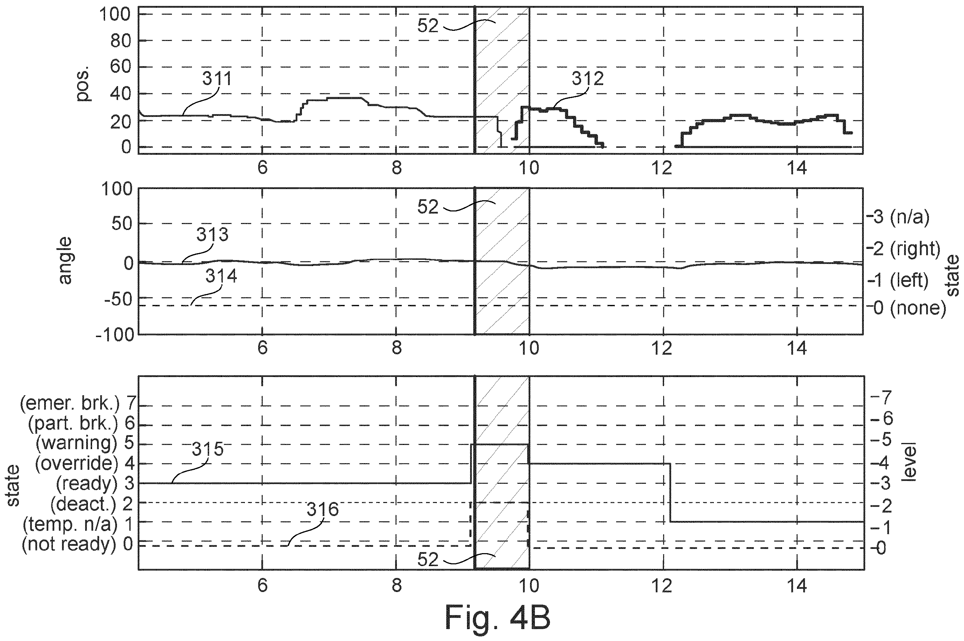

**Fig. 4B** shows another traffic situation such as a vehicle ahead making a right turn while the ego vehicle continues moving on the same lane. The acceleration pedal position 311 shows after an acceleration at about time=7 followed by a gradual decreasing actuation which becomes again zero position within the warning 52 shortly before the time=10, where the fifth graph 315 indicates again the state 5 of warning with collision warning level 2 (i.e. the warning is issued). A little moment later, the braking pedal 312 is actuated which is sufficiently strong to override the conventional warning 52, i.e. the warning 52 is turned off (caused by the brake actuation 312). At the same time, the steering angle 313 indicates that the ego vehicle does not make a turn, i.e. keeps moving straight forward.

Again, according to embodiments, these actions are monitored, and the apparatus 100 may infer that the driver is aware of the situation. For example, the releasing of the acceleration pedal 311 shows that the driver wishes to decelerate the vehicle. At the same time, since direction indicator is not activated (graph 314 shows state 0, no direction change) the driver wishes to proceed straight, i.e. does not follow the turning vehicle ahead.

Therefore, embodiments will again avoid this needless warning 52 which would have been issued by the conventional system and which would have again confused or distracted the driver.

These are only two examples. There are other situations where the driver clearly indicates that s/he is aware of the situation and is still able to handle it - even though the situation might be unexpected and/or critical. In such situation it is often safer if the driver is not additionally disturbed. However, embodiments still ensure that an emergency braking can be performed in time, but any needless alerts/warnings are suppressed and will only be issued when, the activities of the driver apparently are insufficient to resolve the situation.

Therefore, embodiments overcome deficiencies of conventional emergency braking systems that still compromise between performance in defined test cases and false positive activations in more complex traffic scenarios. To avoid unwanted interventions or end a started one, conventional systems suppress driver inputs below a minimum threshold, or only sufficiently strong interactions can override the system.

However, embodiments make use of the fact that the driver actions can be predicted in some situations from the whole context of the traffic situation, e.g. that a strong intervention is unnecessary (e.g. slow turning target vehicle is leaving the lane short term). Embodiments recognize these minor indications of the driver activity even below the minimum thresholds and do not suppress the emergency braking intervention completely - but to delay the start of the warning. For this purpose, embodiments recognize or monitor driver actions that indicate that the driver will react in the near future or has reacted already (e.g. release of the accelerator pedal, completed speed reduction by braking, turning speed of the steering wheel, activating turning lights etc.).

The description and drawings merely illustrate the principles of the disclosure. It will thus be appreciated that those skilled in the art will be able to devise various arrangements that, although not explicitly described or shown herein, embody the principles of the disclosure and are included within its scope.

Functions of various elements shown in the figures, including any functional blocks labeled such as "monitoring device", "delay device" etc., may be provided through the use of dedicated hardware, such as "a signal provider", "a signal processing unit", "a processor", "a controller", etc. as well as hardware capable of executing software in association with appropriate software. Moreover, any entity described herein as "device", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the disclosure. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective acts of these methods. Further, it is to be understood that the disclosure of multiple acts or functions disclosed in the specification or claims may not be construed as to be within the specific order. Therefore, the disclosure of multiple acts or functions will not limit these to a particular order unless such acts or functions are not interchangeable for technical reasons. Furthermore, in some examples a single act may include or may be broken into multiple sub acts. Such sub acts may be included and part of the disclosure of this single act unless explicitly excluded.

Furthermore, while each embodiment may stand on its own as a separate example, it is to be noted that in other embodiments the defined features can be combined differently, i.e. a particular feature descripted in one embodiment may also be realized in other embodiments. Such combinations are covered by the disclosure herein unless it is stated that a specific combination is not intended.

### LIST OF REFERENCE SIGNS

- 50: emergency braking system
- 52: warning, warning period
- 54: emergency braking
- 100: warning avoidance apparatus
- 105: driver alertness
- 106: pre-warning period
- 110: monitoring device
- 115: delay period
- 120: delay device
- 122: delayed warning
- 311, 312,...: graphs related to sensor data
- t1: time of detected driver alertness
- t2: start time of conventional warning
- t3: start time of delayed warning or relaxation of emergency situation
- t4: start time of emergency braking
- t5: estimated collision time

## Claims

1. An apparatus (100) for avoiding a needless warning of an emergency braking system (50) of a vehicle, the emergency braking system (50) being configured to analyze a traffic situation, to issue a warning (52), and, after a warning period, to initiate an emergency braking (54) to avoid an otherwise inevitable collision of the vehicle, **characterized by:**
- a monitoring device (110) configured to monitor a driver activity during the traffic situation and to detect a driver alertness (105) for the traffic situation; and
- a delay device (120) configured to delay a starting of the warning (52) or to provide a shortened warning (122) based on detected driver alertness (105) to avoid the needless warning.

2. The apparatus (100) according to claim 1, wherein the delay device (120) is configured to maintain a timing for the emergency braking (54).

3. The apparatus (100) according to claim 1 or claim 2, wherein the monitoring device (110) is configured to detect as driver activity a value or a speed of change of one or more of the following: a steering angle, position of steering wheel, an accelerator pedal position, a brake actuation, a direction indicator.

4. The apparatus (100) according to claim 3, wherein the monitoring device (110) is configured to detect the driver alertness (105) if the driver activity was within a predetermined period (106) before a start of the warning period (52).

5. The apparatus (100) according to any one of claims 1 to 4, wherein the delay device (120) is configured to control the emergency braking system (50) to do at least one of the following:
- to issue the delayed warning (122),
- to suppress the warning (52) during the delay (115),
- not to issue any warning and to issue the delayed warning (122) as replacement.

6. The apparatus (100) according to any one of claims 1 to 5, wherein the delay device (120) is configured to override the emergency braking (54) based on the detected driver alertness (105).

7. The apparatus (100) according to any one of claims 1 to 6, wherein the emergency braking system (50) is configured to ignore driver activities below one or more minimal threshold values, and wherein the wherein monitoring device (110), when detecting the driver alertness (107), is configured to monitor the driver activity also below the one or more threshold values.

8. An emergency braking system (50) comprising:
a controller, being configured to analyze a traffic situation, to issue a warning (52), and, after a warning period, to initiate an emergency braking (54) to avoid an otherwise inevitable collision of the vehicle; and
an apparatus according to any one of claim 1 to 7, being configured to delay the warning (52) and/or to shorten and/or to override the emergency braking (54) if the detected driver alertness (107) is above a threshold level.

9. A method for avoiding a needless warning of an emergency braking system (50) of a vehicle, the emergency braking system (50) being configured to analyze a traffic situation, to issue a warning (52), and, after a warning period, to initiate an emergency braking (54) to avoid an otherwise inevitable collision of the vehicle,
**characterized by:**
- monitoring (S110) a driver activity during the traffic situation;
- detecting (S120) a driver alertness (105) for the traffic situation; and
- delaying (S130) a starting of the warning (52) based on detected driver alertness (105) to avoid the needless warning.

10. A computer-readable storage device comprising instructions for carrying out at least some of the steps of the method according to claim 9, when the instructions are executed on a data processor.
